# EUROPEAN PATENT APPLICATION

(11) **EP 2 574 753 A1**
(43) Date of publication of application: **03.04.2013**
(21) Application number: 11182936.2
(22) Date of filing: 27.09.2011
(51) Int. Cl.: F02B 29/04

(54) **Cooling system for two-stage charged engines**

(71) Applicant: Caterpillar Motoren GmbH & Co. KG, 24159 Kiel (DE)
(72) Inventor: Schlemmer-Kelling, Udo, 24113 Molfsee (DE); Rickert, Carsten, 24114 Kiel (DE); Ruschmeyer, Kai, 37389 Fintel (DE)
(74) Representative: Kramer - Barske - Schmidtchen

(57) **Abstract**

For flexible cooling of intake air under a range of environmental conditions, a cooling system of a two-stage turbocharged internal combustion engine may comprise a high temperature (HT) cooling circuit (30) and a low temperature (LT) cooling circuit (50). HT cooling circuit (30) may comprise a first pump (32) for pumping a first coolant through the HT cooling circuit (30) and a pre-compressed intake air high temperature cooler (34) for cooling pre-compressed intake air generated by a first compressor (12) of a low pressure stage turbocharger. The LT cooling circuit (50) may comprise a second pump (52) for pumping a second coolant through the LT cooling circuit (50) and a compressed intake air low temperature cooler (54) for cooling compressed intake air generated by a second compressor (14) of a high pressure stage turbocharger by compressing the pre-compressed intake air. The HT cooling circuit (30) may further comprise a compressed intake air high temperature cooler (36) positioned upstream of the compressed intake air low temperature cooler (54). The cooling system may provide for a flexible cooling of the intake air for different environmental situations.

## Description

### Technical Field

The present disclosure generally refers to two-stage charged internal combustion engines and more particularly to cooling systems for cooling the intake air prior to charging an internal combustion engine.

### Background

Charged engines may comprise two-stage turbocharged systems having, for example, a low pressure stage turbocharger and high pressure stage turbocharger. The compressors of those turbochargers may be used to compress the intake air before charging the combustion chambers. For example, in a first step, the intake air may be pre-compressed by the low pressure stage turbocharger and, then, in a second step, the pre-compressed intake air may be further compressed by the high pressure stage turbocharger.

Compressing the intake air is accompanied by an increase in temperature of the intake air. To control that temperature increase, cooling systems with respective coolers may be provided.

Some internal combustion engines may apply exhaust gas recirculation (EGR), which adds exhaust gas to the intake air prior charging the combustion chambers of the engine. EGR may be applied, for example, to reduce NOₓ emission.

An example of a two-stage charged engine is disclosed in EP 2 330 287 A1, whereby the exhaust gas is also subjected to a compressor stage for compressing the recirculated exhaust gas before it is recombined with the intake air. A cooling system with inter alia a super high temperature cooling circuit provides cooling of the recirculated exhaust gas.

EP 2 106 999 B1 discloses a cooling system for marine applications including thermal energy recovery.

The present disclosure is directed, at least in part, to improving or overcoming one or more aspects of prior systems.

### Summary of the Disclosure

According to a first aspect of the present disclosure, a cooling system for a two-stage turbocharged internal combustion engine may comprise a high temperature cooling circuit that may comprise a first pump for pumping a first coolant through the high temperature cooling circuit and a pre-compressed intake air high temperature cooler for cooling pre-compressed intake air with the first coolant. The pre-compressed intake air may be generated by a first compressor of a low pressure stage turbocharger of the two-stage turbocharged internal combustion engine. The cooling system may further comprise a low temperature cooling circuit that may comprise a second pump for pumping a second coolant through the low temperature cooling circuit and a compressed intake air low temperature cooler for cooling compressed intake air with the second coolant. The compressed intake air may be generated by a second compressor of a high pressure stage turbocharger of the two-stage turbocharged internal combustion engine by compressing the pre-compressed intake air.

In another aspect, the cooling system may further be configured such that, for cooling the compressed intake air prior to cooling with the compressed intake air low temperature cooler, the high temperature cooling circuit of the cooling system may comprise a compressed intake air high temperature cooler positioned upstream (with respect to the intake air flow) of the compressed intake air low temperature cooler.

In another aspect of the present disclosure, a cooled intake air system for a two-stage turbocharged internal combustion engine may comprise a low pressure stage turbocharger that may comprise a first compressor to provide pre-compressed intake air, a high pressure stage turbocharger that may comprise a second compressor for compressing the pre-compressed intake air to provide compressed intake air, and a cooling system as described above.

In another aspect of the present disclosure, an internal combustion engine may comprise a crankshaft and a cooling system as described above, wherein the first pump and the second pump of the cooling system are driven by the crankshaft, e.g. via a reduction gear.

The cooling systems disclosed herein may address specific issues of two-stage turbocharged engines. For example, the intake air temperature after the low pressure stage may be maintained above the due point, e.g. in the range of 60 °C, thereby avoiding liquid condensation before the high pressure stage and, e.g., any potential condensate droplet damage of the compressor blade. Thus, in some embodiments, cooling via the low temperature cooling circuit before the high pressure stage may not be required. Moreover, the pressure ratio at the high pressure stage may be much lower than at the low pressure stage. This may lead to lower heating during the second compression, e.g. the compressed intake air may be a lower temperature than for a single-stage turbocharged engine. Accordingly, in some embodiments there may be only a small contribution to waste heat recovery by cooling via the high temperature cooling circuit, so cooling via the low temperature cooling circuit after the high pressure stage may be sufficient.

In some embodiments, providing cooling via the high temperature cooling circuit may provide for additional flexibility while maintaining a reduced amount of piping.

Other features and aspects of this disclosure will be apparent from the following description and the accompanying drawings.

### Brief Description of the Drawings

Fig. 1 is a schematic diagram of a two-stage charged internal combustion engine for illustrating the intake air flow and a first cooling system for cooling the intake air;
Fig. 2 is a schematic diagram of a two-stage charged internal combustion engine for illustrating the intake air flow and a second cooling system for cooling the intake air;
Fig. 3 is a schematic diagram of a two-stage charged internal combustion engine for illustrating the intake air flow and a third cooling system for cooling the intake air;
Fig. 4 is a schematic diagram of a two-stage charged internal combustion engine for illustrating a cooled exhaust gas recirculation system; and
Fig. 5 is a schematic diagram of a cooling system comprising a low temperature cooling circuit and a high temperature cooling circuit.

### Detailed Description

The following is a detailed description of exemplary embodiments of the present disclosure. The exemplary embodiments described herein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that, particularly for engine driven pumps of a cooling system, low and high temperature cooling circuits may each be configured to be driven by a single pump and provide cooling of pre-compressed intake air as well as a flexible cooling of the compressed intake air, to allow charging of the engine in a wide temperature range. The cooling systems disclosed herein may be operated with engine driven pumps, e.g. pumps driven by the engine's crankshaft via a reduction gear. The disclosed cooling systems may be realized in simple configurations, which in some embodiments may require a small amount of piping and, therefore, may be space, material, and cost saving.

Moreover, providing cooling of the compressed intake air by the high and/or low temperature cooling circuits may enable operating the engine even without using the low temperature circuit, e.g., to avoid condensation prior to charging or to reduce soot emissions at certain engine operating points.

Similarly, providing cooling of the pre-compressed intake air by the high and low temperature cooling circuits may enable the high pressure stage compressor to be provided with pre-compressed intake air at a low temperature, which may be advantageous for applications such as engines that are designed for lowest possible fuel consumption.

Similarly, providing cooling of the pre-compressed intake air by the high and low temperature cooling circuits may enable providing the second stage compressor with pre-compressed intake air at a temperature above the due point, which may be advantageous for applications operating under humid environment conditions (e.g. tropical conditions), where in general condensation of the pre-compressed air may occur if cooled down below the due point.

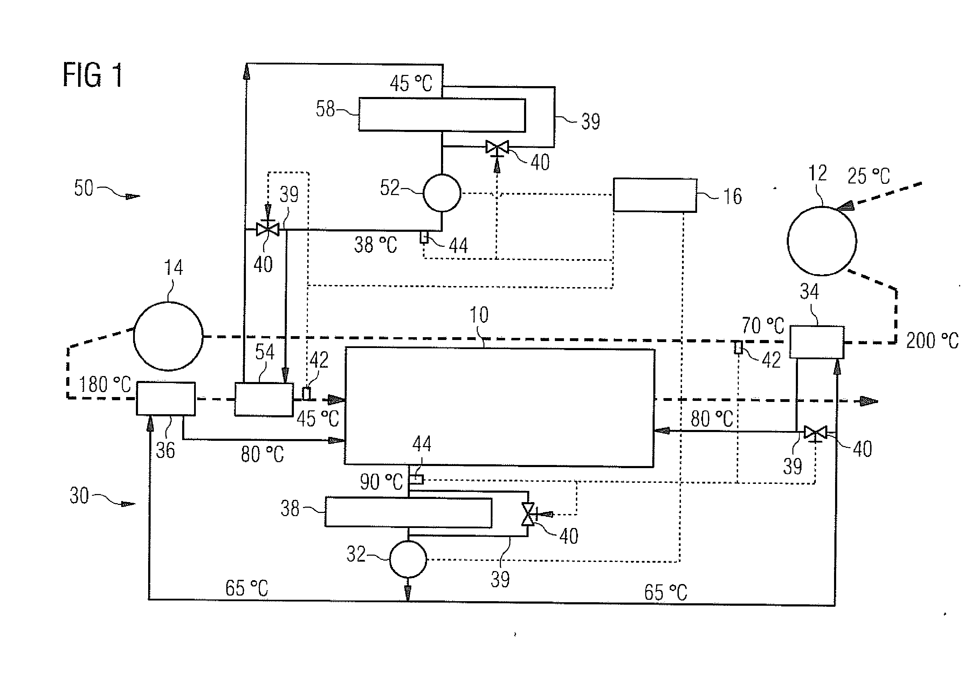

Fig. 1 shows a schematic diagram of an internal combustion engine that may comprise combustion unit 10 with several cylinder units for performing the combustion process. Combustion unit 10 may, for example, be a diesel, heavy fuel, and/or gas powered combustion unit. Combustion unit 10 may comprise a plurality of cylinder units and a plurality of piston assemblies disposed within the cylinder units (not shown). The cylinder units may be disposed in an "in-line" configuration, a "V" configuration, or in any other configuration.

A fuel system (not shown) may provide liquid and/or gaseous fuel to the cylinder units and may be based, for example, on a common rail system.

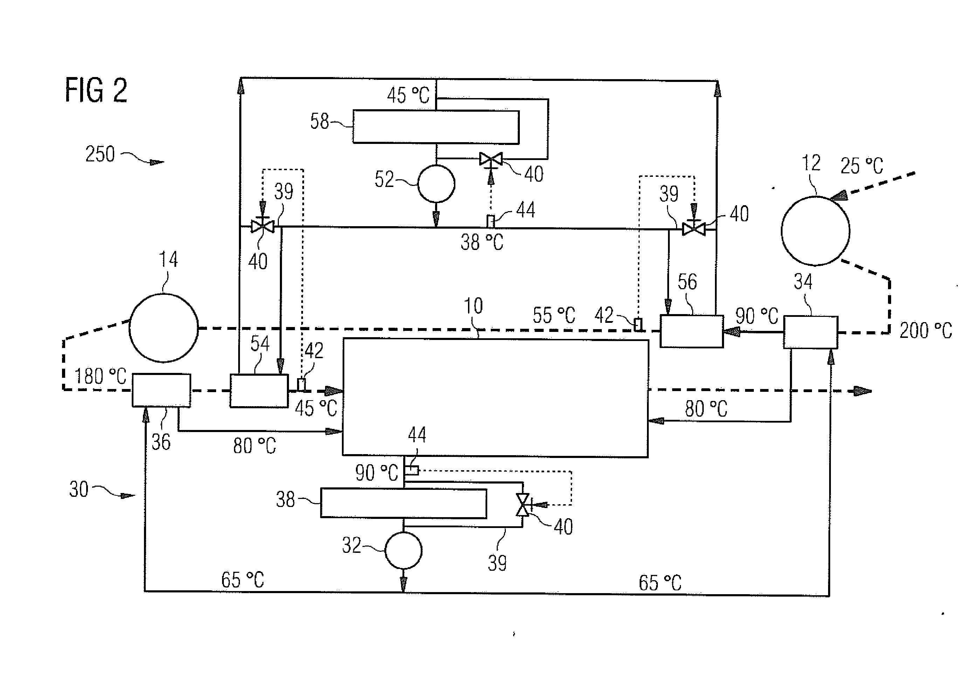

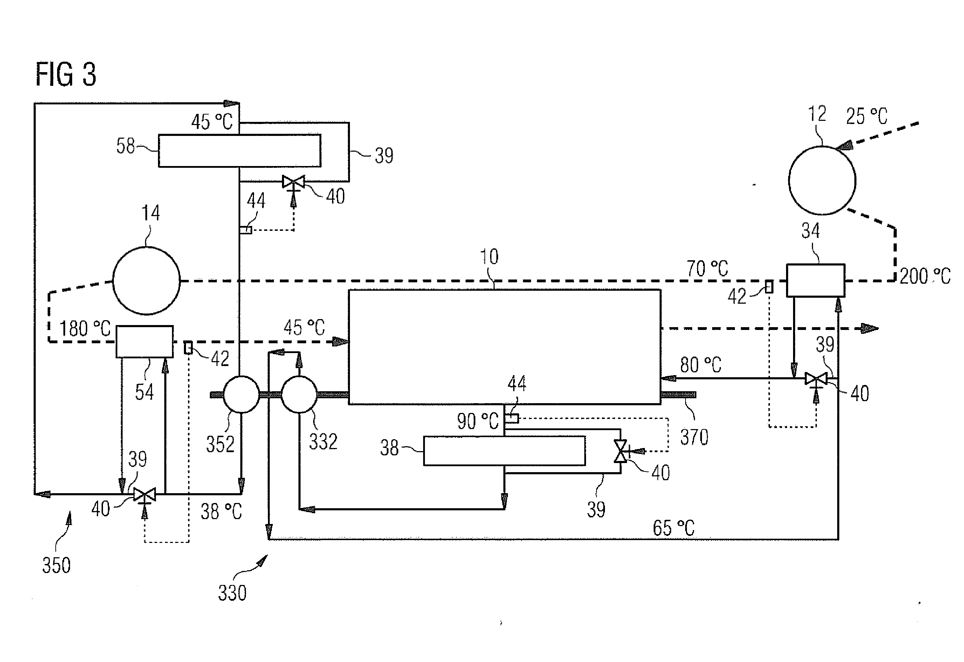

In Fig. 1 (as well as in Fig. 2 and 3), thick dashed lines indicate the intake air path and the exhaust gas path.

As shown in Fig. 1, an intake air system with a low pressure stage turbocharger with a first compressor 12 and a high pressure stage turbocharger with a second compressor 14 may provide compressed charge air to the cylinder units. Specifically, first compressor 12 may be configured to compress ambient intake air to pre-compressed intake air at a first pressure range and second compressor 14 may be configured to compress the pre-compressed intake air to compressed intake air at a second pressure range for charging the cylinders.

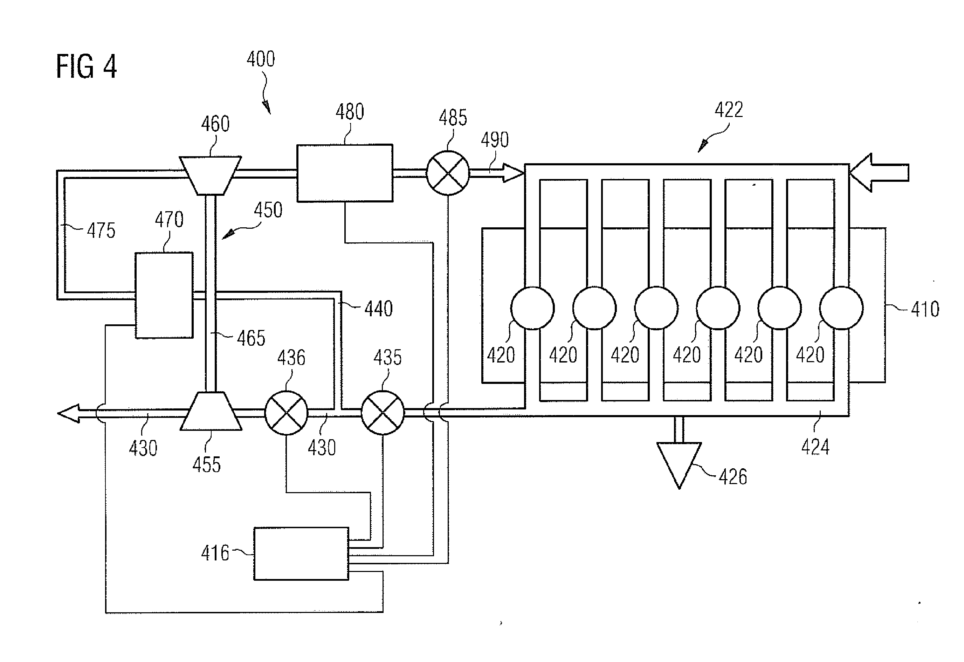

An exhaust gas system (not shown) may comprise, for example, turbines (not shown) for driving compressors 12 and 14. The exhaust gas system may further comprise exhaust gas treatment devices such as catalyst based devices. In some embodiments, some exhaust gas from the exhaust gas system may be redirected to the intake air system to provide an exhaust gas/intake air mixture to the cylinders (EGR). An exemplary fluid connection system for the exhaust gas from combustion unit 10 to the intake air system is described, for example, in connection with Fig. 4 below.

During operation of the engine, cooling of the cylinder units to dissipate the heat generated by the combustion processes may be performed. In addition, compressing the intake air may result in heated pre-compressed and compressed intake air. To ensure proper engine operation, the intake air may also be cooled.

A control unit 16 may be used to control the cooling. In Fig. 1 (as well as in Fig. 2 and 3), control connections from control unit 16 to various elements or between various elements are indicated by thin dotted lines.

A cooling system for performing the cooling may comprise a high temperature (HT) cooling circuit 30 and a low temperature (LT) cooling circuit 50. In Figs. 1 to 3, coolant lines of the HT cooling circuit 30 and LT cooling circuit 50 are indicated by a thin line.

In the embodiment shown in Fig. 1, HT cooling circuit 30 may comprise a pump 32 for circulating the (HT) coolant through a pre-compressed intake air high temperature cooler 34 (herein referred to as first cooler 34) and a compressed intake air high temperature cooler 36 (herein referred to as second cooler 36) for cooling the intake air, and a main HT cooler 38 for dissipating the heat acquired by the coolant and ensuring a stabilized lowest temperature of e.g. 64 °C of the coolant.

For example, HT cooling circuit 30 may be configured to cool, in first cooler 34, pre-compressed intake air exiting compressor 12 of the low pressure stage turbocharger and, in second cooler 36, compressed intake air exiting compressor 14 of the high pressure stage turbocharger.

Furthermore, HT cooling circuit 30 may circulate the coolant from one or both of the first and second coolers 34, 36 through combustion unit 10 (e.g. through cylinder specific water rings) to receive the heat of the combustion.

Elements of the HT cooling circuit 30 may be bypassed via by-pass lines 39 (shown exemplarily for first cooler 34 and main HT cooler 38). The flow through the by-pass line may be controlled via control valves 40, which are, for example, controlled by control unit 16 using temperature sensors. Temperature sensors may comprise intake air temperature sensors 42 (e.g. arranged in or close to the flow path of the intake air) and coolant temperature sensors 44 (e.g. arranged in or close to the flow path of the coolant).

For example, valve 40 in the by-pass of main HT cooler 38 may be configured to direct all or only a part of the coolant to main HT cooler 38, thereby adjusting the amount of heat taken out of HT coolant circuit 30.

In the embodiment shown in Fig. 1, LT cooling circuit 50 may comprise a pump 52 for circulating the (LT) coolant through compressed intake air low temperature cooler 54 (herein referred to as third cooler 54) for cooling compressed intake air, and a main LT cooler 58 for dissipating the heat acquired by the coolant and ensuring a stabilized lowest temperature of e.g. 38 °C of the coolant.

For example, LT cooling circuit 50 may be configured further to cool the compressed intake air downstream of second cooler 36 of HT cooling circuit 30 for providing compressed charge air to combustion unit 10 at a temperature of e.g. 45 °C.

As in HT cooling circuit 30, various elements of LT cooling circuit 50 may be bypassed, whereby the amount of the bypassed coolant may be controlled via control valves 40, intake air temperature sensors 42, coolant temperature sensors 44, and generally control unit 16.

In general, LT cooling circuit 50 may provide an intake air temperature as low as feasible to provide a high density of the intake air and correspondingly a high engine power. Cooling in-between the two turbocharger stages may increase the second compression efficiency.

In some embodiments, control unit 16 may be able to control one or both pumps 32 and 52 as indicated in Fig. 1 via small dotted lines. However, as explained in connection with Fig. 3, pumps 32 and 52 may be mechanically driven by the crankshaft of the engine e.g. via a reduction gear such that a control of the pump speed may depend on the speed of the engine (and the reduction gear).

In general, heat may be recovered from the high temperature cooling circuit via a heat recovery systme, for example, for preheating the fuel tank. In the configuration of Fig. 1, heat may be recovered from the cooling of the pre-compressed intake air as well as from cooling the compressed intake air.

Fig. 2 shows a modification of the cooling system shown in Fig. 1. Specifically, LT cooling system 250 may further comprise a pre-compressed intake air low temperature cooler 56 (herein referred to as fourth cooler 56) arranged downstream of first cooler 34 of HT cooling circuit 30 within the intake air path. In Fig. 2, by-pass configurations are indicated for some elements of HT cooling circuit 30 and LT cooling circuit 250 (for example, for third cooler 54 and fourth cooler 56). In Fig. 2, a control unit for controlling one ore more of the valves and pumps is not explicitly shown but may similarly be integrated as discussed with respect to the embodiment shown in Fig. 1.

Providing fourth cooler 56 between the two stages of the two-stage turbocharged system may allow decreasing the temperature of the pre-compressed intake gas even further, thereby being more flexible in adapting the intake air system to specific conditions such as a dry environment where in general the dew point of the pre-compressed air is low, so cooling down the pre-compressed air to a temperature of, for example 45 °C, may be possible without condensation and may be advantageous for a high turbocharging efficiency and, thereby, a low fuel consumption.

In particular, the configuration shown in Fig. 2 may provide for a compact configuration with an efficient piping outlay of the cooling systems. For example, first cooler 34 (pre-compressed intake air high temperature cooler) and fourth cooler 56 (pre-compressed intake air low temperature cooler) may be configured as a pre-compressed intake air cooler unit. Similarly, second cooler 36 (compressed intake air high temperature cooler) and third cooler 54 (compressed intake air low temperature cooler) may be configured as a compressed intake air cooler unit.

Fig. 3 shows a further modification of the cooling system shown in Fig. 1. Specifically, an HT cooling circuit 330 may only comprise first cooler 34, thus providing only second cooler 36 of an LT cooling circuit 350 for cooling the compressed intake air leaving second compressor 14.

In Fig. 3, a control unit for controlling one or more of the valves is not explicitly shown but may similarly integrated as discussed with respect to the embodiment shown in Fig. 1. Bypasses are indicated for some elements of HT cooling circuit 330 and LT cooling circuit 350 (for example, for main LT cooler 38 and main HT cooler 58).

In addition, Fig. 3 shows a configuration in which pumps 332 and 352 may be mechanically driven by the combustion engine. Specifically, Fig. 3 indicates schematically a crankshaft 370 interacting with pump 332 of HT cooling circuit 330 as well as pump 352 of LT cooling circuit 350.

Such a pump configuration may be advantageously applied to any of the herein disclosed configurations.

In particular, the pump and cooler configuration shown in Fig. 3 may provide for a compact configuration with an efficient piping outlay of the cooling systems. For example, shortcutting the pre-compressed intake air cooler unit described above for Fig. 2, e.g. fluidly connecting the first cooler 34 (pre-compressed intake air high temperature cooler) and the fourth cooler 56 (pre-compressed intake air low temperature cooler), may allow using the pre-compressed intake air cooler unit only for high temperature cooling. Similarly, shortcutting the compressed intake air cooler unit described above for Fig. 2, e.g. fluidly connecting second cooler 36 (compressed intake air high temperature cooler) and third cooler 54 (compressed intake air low temperature cooler), may allow using the compressed intake air cooler unit only for high temperature cooling.

Referring to Fig. 1, a 'short cut' intake air cooler unit (as described above for Fig. 3) for the cooling of the pre-compressed and an intake air cooler unit (as described above for Fig. 2 with separate low and high temperature cooling systems) for the cooling of the compressed may be used. Accordingly, the embodiments disclosed herein may be used with compact cooling units based on cooling units used for single stage turbocharged engines.

Fig. 4 shows a two-stage charged internal combustion engine comprising a cooled exhaust gas recirculation system 400. Combustion unit 410 may comprise combustion chambers 420, an inlet manifold 422, and an exhaust gas manifold 424. During operation, hot exhaust gas generated in combustion chambers 420 may be directed to the high pressure and/or low pressure turbochargers (not shown) fluidly connected to an exhaust gas outlet 426 of exhaust gas manifold 424 and drive their turbines.

Exhaust gas manifold 424 may further be fluidly connected to an exhaust gas line 430. Exhaust gas line 430 may comprise a first valve 435 and/or second valve 436. Both valves 435 and 436 may be connected to a control unit 416. Upstream of second valve 436 and downstream of first valve 435 an exhaust gas recirculation line 440 may branch off. An exhaust gas turbine 455 may be located upstream or downstream of second valve 436. Exhaust gas turbine 455 may be a component of an exhaust gas charger system 450. An exhaust gas compressor 460 may be driven via a shaft 465 by exhaust gas turbine 455. Exhaust gas recirculation line 440 may be connected to a first exhaust gas cooler 470. An outlet of exhaust gas cooler 470 may be connected to a further exhaust gas recirculation line 475, which may supply the cooled exhaust gas to exhaust gas compressor 460.

Another part of exhaust gas recirculation line 475 may connect exhaust gas compressor 460 and a second exhaust gas cooler 480 with each other. A third valve 485 may be arranged downstream of second exhaust gas cooler 480. First, second, and third valve 435, 436, 485 each may consist of a simple throttle operable to allow blocking or unblocking of the exhaust gas flow and the recirculation of exhaust gases via lines 440, 475. An end part 490 of the exhaust gas recirculation line may connect downstream of valve 485 to inlet manifold 422.

In some embodiments of the cooling systems disclosed herein, first exhaust gas cooler 470 may be part of the HT cooling circuit, e.g. in line or parallel integrated with respect to first cooler 34 of the cooling systems of Figs. 1 to 3.

Similarly, in some embodiments of the cooling systems disclosed herein, second exhaust gas cooler 480 may be part of the LT cooling circuit, e.g. in line or parallel integrated with respect to third cooler 54 of the cooling systems of Figs. 1 to 3.

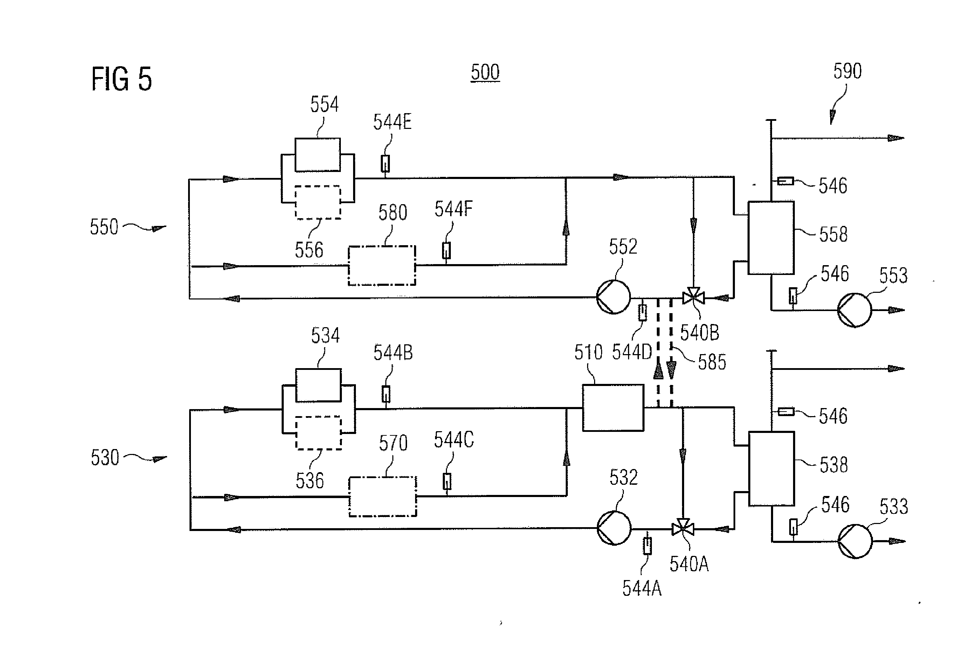

Fig. 5 shows a generic schematic diagram of a cooling system 500 comprising an HT cooling circuit 530 and an LT cooling circuit 550. The configuration in solid lines corresponds, for example, to the embodiment shown in Fig. 1. The configuration including the element indicated by a dotted-line box corresponds, for example, to the embodiment shown in Fig. 2. The configuration including the elements indicated by a dash-dotted line box corresponds, for example, to the embodiment shown in Fig. 4. The feature indicated by the dotted arrows relates to a configuration with fluidly connected cooling circuits.

HT cooling circuit 530 may comprise (starting at the pump) an HT pump 532, several elements for dissipating heat to a coolant (e.g. water) pumped through HT cooling system 530. Examples of those elements may comprise, e.g., first intake air cooler 534 (pre-compressed intake air high temperature cooler) and second intake air cooler 536 (compressed intake air high temperature) for transferring heat from the intake air to the coolant. Further examples may include a first exhaust gas cooler 570 for transferring heat from the exhaust gas to the coolant and an engine cooling system of a combustion unit 510 for transferring heat of the combustion process to the coolant. In addition, HT cooling circuit 530 may comprise a main HT cooler 538. For controlling the flow of the coolant through HT cooling circuit 530, several valves and temperature sensors may interact with a control unit (not shown).

Specifically, the coolant of HT cooling circuit 530 may be pumped by HT pump 532 through first and second intake air coolers 534 and 536 and combustion unit 510. The (lowest) temperature of the coolant measured by temperature sensor 544A may be e.g. about 69°C. The temperature of the coolant leaving first and second intake air coolers 534 and 536 may be e.g. about 80°C, which may be measured by a temperature sensor 544B. After the coolant is recirculated through combustion unit 510, its temperature may be e.g. about 90°C.

A portion of the coolant circulating in HT cooling circuit 530 not flowing through main HT cooler 538 may be adjusted by a valve 540A, e.g. in dependency on the temperature detected by a temperature sensor 544A. Thereby, the lowest temperature of the circulating coolant may be adjusted to a desired value.

Main HT cooler 538 may be part of an external cooling circuit 590 through which some or all heat acquired by the coolant in HT cooling circuit 530 may be dissipated. External cooling circuit 590 may comprise an external coolant, an external pump 533 for pumping the external coolant through main HT cooler 538, temperature sensors 546, and valves (not shown).

For example, in land applications, air cooling of main HT cooler 538 may be applied, while in marine applications, sea water may be pumped by means of a sea water pump through main HT cooler 538.

HT cooling circuit 530 may further be used to cool exhaust gas prior to exhaust gas recirculation via first exhaust gas cooler 570. First exhaust gas cooler 570 may be e.g. arranged in a parallel circuit as shown. In some embodiments, it may be connected in line (upstream or downstream) with one (or both) of first and second intake air coolers 534 and 536.

The coolant temperature downstream of first exhaust gas cooler 570 may be e.g. around 80 °C as measured, for example, with a temperature sensor 544C.

The advantage of supplying first exhaust gas cooler 570 with high temperature coolant may be to enable that at least the surfaces of first exhaust gas cooler 570 do not have a temperature below a dew point of a specific component, e.g. sulphur acid etc., of the exhaust gas to be cooled by first exhaust gas cooler 570. Thus, corrosion within first exhaust gas cooler 570 may be reduced or even prevented. In addition, it might be possible to reduce or even avoid corrosion in exhaust gas compressor 460 and at the entry of second exhaust gas cooler 480 (as shown in Fig. 4).

LT cooling circuit 550 may comprise (starting at the pump) an LT pump 552 and several elements for dissipating heat to a coolant (e.g. water) pumped through LT cooling system 550. Examples of those elements may include, e.g., third intake air cooler 554 (compressed intake air low temperature cooler) and a fourth intake air cooler556 (pre-compressed intake air low temperature cooler) for transferring heat from the intake air to the coolant. A further example may be a second exhaust gas cooler 580 for transferring heat from the exhaust gas to the coolant. In addition, LT cooling circuit 550 may comprise a main LT cooler 558. For controlling the flow of the coolant through LT cooling circuit 550, several valves and temperature sensors may interact with a control unit (not shown).

Specifically, the coolant of LT cooling circuit 550 may be pumped by LT pump 552 through third and fourth intake air coolers 554 and 556. The (lowest) temperature of the coolant measured by temperature sensor 544D may be e.g. about 38 °C. The temperature of the coolant leaving third and fourth intake air coolers 554 and 556 may be e.g. about 45 °C, which may be measured by a temperature sensor 544E.

Main LT cooler 558 may also be part of external cooling circuit 590 through which some or all heat acquired by the coolant in LT cooling circuit 550 may be dissipated. External cooling circuit 590 may comprise an external coolant, an external pump 553 for pumping the external coolant through main LT cooler 558, temperature sensors 546, and valves (not shown).

For example, in land applications, air cooling of main LT cooler 558 may be applied, while in marine applications, sea water may be pumped by means of a sea water pump through main LT cooler 558.

LT cooling circuit 550 may further be used to cool exhaust gas prior to exhaust gas recirculation via second exhaust gas cooler 580. Second exhaust gas cooler 580 may be arranged in a parallel circuit as shown. In some embodiments, it may be connected in line (upstream or downstream) with one (or both) of third and fourth intake air coolers 554 and 556.

The coolant temperature downstream of second exhaust gas cooler 580 may be e.g. around 40 °C as measured, for example, with a temperature sensor 544F.

Cooling the recirculated exhaust gas via second exhaust gas cooler 580 using the low temperature coolant may allow maintaining the temperature of the charge air prior to injection at a desired value.

Again, via a valve 540B the part of the coolant recirculated within the HT cooling circuit 500 not passing through main HT cooler 558 may be adjusted.

Some embodiments may include main LT cooler 558 and main HT cooler 538 of external cooling circuit 590 within a common external cooling circuit, e.g. by connecting those coolers fluidly, which may have the advantage of a reduced amount of pumps in external cooling circuit 590.

In some embodiments, e.g. in marine applications, the heat acquired in both of HT and LT cooling circuits 530 and 550 may be dissipated via main LT cooler 558 only. In that case, a coolant exchange between HT and LT cooling circuits 530 and 550 (indicated by dotted arrows 585 in Fig. 5) may allow transferring the heat acquired in HT cooling circuit 530 to LT cooling circuit 550 by mixing the coolants prior to dissipating the heat via main LT cooler 558.

As illustrated by the different line types of the various features of LT and HT cooling circuits, various configurations are represented in Fig. 5. In addition, configurations based on different combinations of the herein described cooling system features may include, for example, a combination of the configuration of Fig. 3 and Fig. 4. Such a combination may be represented by modifying Fig. 5 such that second cooler 536 may not be present in HT cooling circuit 530.

In some embodiments, low and high temperature coolers may be combined in a single structural unit. Referring exemplarily to Fig. 1, compressed intake air high temperature cooler 36 and compressed intake air low temperature cooler 54 may be configured as a single unit attached at one side of combustion unit 10. Similarly, referring exemplarily to Fig. 2, pre-compressed intake air high temperature cooler 34 and pre-compressed intake air low temperature cooler 56 may be configured as a single unit attached at the e.g. opposing side of combustion unit 10. Thereby, the configuration of the cooling system may be based on a compact piping configuration.

### Industrial Applicability

In the following, the basic operation of the above exemplary embodiments of cooling systems implemented in a cooled intake air system of an internal combustion engine is described with reference to Figs. 1 to 5.

During normal operation of an internal combustion engine, a continuous flow of intake air may be provided to engine unit 10, combusted therein, and released as exhaust gas. For compression of the intake air, the cooled intake air system may comprise a two-stage turbocharged system.

During compression in the first stage (compressor 12), the intake air may be heated to 200 °C.

Cooling elements of cooling system 50 may be arranged between the two stages. For example, first cooler 34 of HT cooling system 30 may cool the pre-compressed (i.e. compressed by the first stage of the tow-stage turbocharged system) down to e.g. about 70 °C. In some embodiments, third cooler 56 of LT cooling system 50 may cool the pre-compressed intake air further, e.g. down to 55 °C. In the presence of third cooler 56, first cooler 34 may cool down to a higher temperature, e.g. only 90 °C.

During compression in the second stage (compressor 14), the pre-compressed intake air may be heated to e.g. 180 °C.

Cooling elements of cooling system 50 may be arranged between the second stage and engine unit 10. For example, second cooler 36 of HT cooling system 30 may cool the compressed intake air (i.e. compressed by the second stage of the tow-stage turbocharged system) down to e.g. about 80 °C. Third cooler 54 may cool the compressed intake air further, e.g. down to 45 °C.

In some embodiments, second cooler 36 ofHT cooling system 30 may not be applied and cooling of the compressed intake air may only be performed by third cooler 54 of LT cooling circuit 50.

Coolant of HT cooling circuit 30 (having a temperature of e.g. about 80 °C when leaving the first and/or second coolers 34 and 36) may then be supplied to cooling channels of engine unit 10 and leave engine unit 10 at a temperature of e.g. 90 °C. The coolant may then be reduced in temperature by e.g. main HT cooler 38 and/or by mixing with coolant of LT cooling circuit 50.

The coolant of LT cooling circuit having a temperature of about 45 °C when leaving the third and/or fourth coolers 54 and 56 may be reduced in temperature by e.g. main LT cooler 58.

Referring specifically to Figs. 4 and 5, the exhaust gas leaving engine unit 10 e.g. via an exhaust manifold may be used to drive turbines of the two-stage turbocharged system and, in the case of EGR, turbines of the EGR system.

For EGR, the exhaust gas may be recompressed by exhaust gas compressor 460. Prior to recompressing, the exhaust gas may be cooled in first exhaust gas cooler 570 of HT cooling circuit 530 down to e.g. 180 °C. During compression in exhaust gas compressor 460, the exhaust gas may be heated to e.g. 200 °C and may be then again cooled by second exhaust gas cooler 580 down to e.g. about 45 °C, before being mixed with the cooled and compressed charge air.

In some embodiments, the recycled exhaust gas may be cooled less (e.g. only with one exhaust gas cooler) or not at all and be intermixed with the intake air prior to or in between coolers 36 and 54, thereby being subjected to the cooling of the intake air.

Referring to Fig. 4, guiding of the exhaust gas flow may be performed such that if a specific portion of the exhaust gas may be guided through line 430 and the rest of the exhaust gases may be recirculated through lines 440 and 475, valves 435 and 485 may both receive a control signal from a control unit causing valves 435 and 485 to unblock the flowing path to some extent. Simultaneously, valve 436 may receive an appropriate control signal to partly block the passage of exhaust gas so that a specific portion of exhaust gas may flow through turbine 455 and the rest of the exhaust gas may be recirculated.

In some embodiments of the present disclosure, first exhaust gas cooler 470 may be controlled such that the exhaust gas leaving exhaust gas cooler 470 has a temperature above the dew point of a component of the exhaust gas flow, e.g. sulphur or sulphured acid. Thereby, corrosion or other negative effects within the piping system up to exhaust gas compressor 460 or even up to second exhaust gas cooler 480 may be reduced or prohibited. Second exhaust gas cooler 480 may be controlled by a control unit such that the temperature of the exhaust gas leaving exhaust gas cooler 480 is relatively low, e.g. below the dew point of the component of the exhaust gas mentioned above.

An advantage of cooling the exhaust gas may be that the efficiency of the combustion of the mixture of cooled and compressed exhaust gas and cooled and compressed intake air may be improved.

In general, the control (e.g. control unit 16 of Fig. 1) may be configured to control operation of the combustion engine based on a required mechanical output and, in some systems, a required thermal output. The controller may be configured to receive inputs from temperature sensors. Using the inputs from sensors 40, 42, the controller may be configured to, for example, adjust valves 44 to increase or reduce the amount of coolant directed to elements of the cooling circuits or adjust the pump speed (in case of an adjustable e.g. electrically powered pump) until the desired intake air temperature has been reached.

The controller may be a single microprocessor or plural microprocessors that may include means for controlling, among others, an operation of combustion unit 10, LT and HT coolers 538, 558, and valves 40 as well as other components of the combustion engine. The controller may be a general engine control unit (ECU) capable of controlling numerous functions associated with the engine and/or its associated components. The controller may include all the components required to run an application such as, for example, a memory, a secondary storage device, and a processor such as a central processing unit or any other means known in the art for controlling the combustion engine and its various components. Various other known circuits may be associated with the controller, including power supply circuitry, signal-conditioning circuitry, communication circuitry, and other appropriate circuitry. The controller may analyze and compare received and stored data, and, based on instructions and data stored in memory or input by a user, determine whether action is required.

While Figs. 1 to 3 show exemplarily cooling circuits having coolers arranged in parallel loops, generally one or more coolers may be alternatively or additionally arranged in sequence. The sequence may additionally include the cooling system of the combustion unit. In some embodiments, an high temperature circuit may comprise in series arranged a sequence of pre-compressed intake air cooler, combustion unit, and compressed intake air cooler (in direction of the coolant flow).

While Figs. 1 to 3 indicate thermally decoupled LT and HT coolant circuits, in some embodiments, a main LT cooler may be provided to dissipate the heat of the LT coolant and exchanging LT coolant with HT coolant may be used to achieve the required initial coolant temperature in the HT circuit as disclosed, for example, in EP 2 106 999 B1 mentioned above.

LT and/or HT coolers may comprise (or be part of a circuit comprising) components for utilizing the heat of the coolant, such as, for example, one or more heat exchangers (not shown) or other known components, e.g., components for fresh water generation.

It should be appreciated that HT cooling circuits and LT cooling circuits disclosed herein may include additional valves, coolant lines, sensors, etc. that are not shown in the figures, which may be used to control operation of the respective cooling circuits. The operation of the cooling circuits and their various components may be controlled, for example, by controller 16.

The temperatures of the coolant and the intake air indicated in the figures are for illustration purposes only and may deviate according to operation mode, type of application, type of fuel, etc.

Herein, valves may be a standard two/three-way valve or any other type of controllable flow valve known in the art and may be connected to a controller and/or a controlling sensor via hard-wired communication lines or in any other appropriate manner.

In some aspects, the cooling system may comprise at least a first temperature sensor configured for measuring a temperature of one of the pre-compressed intake air upstream of the second compressor and/or a temperature of the compressed intake air downstream of the compressed intake air high temperature cooler, wherein the first control valve is configured to regulate the coolant flow through the at least one of the intake air coolers based on the temperature measured by the first temperature sensor.

In some aspects, the cooling system may be configured to control the cooling power of the pre-compressed intake air low temperature cooler such that the temperature of the pre-compressed intake air downstream of the pre-compressed intake air low temperature cooler is in the range of around 40°C to around 60°C and/or of the compressed intake air low temperature intake air cooler to increase the temperature of the compressed intake air prior charging cylinders of the internal combustion engine.

In some aspects of the cooling system, the high temperature cooling circuit may include a first external cooler configured for cooling the coolant flowing in the high temperature cooling circuit, a second control valve configured for controlling the amount of coolant flowing through the first external cooler, and a second temperature sensor configured for measuring a temperature of the coolant in the high temperature cooling circuit upstream of the first external cooler, wherein the second control valve is configured to regulate the coolant flow through the first external cooler based on the temperature measured by the second temperature sensor.

In some aspects of the cooling system, the low temperature cooling circuit may include a second external cooler configured for cooling the coolant flowing in the low temperature cooling circuit, a third control valve configured for controlling the amount of coolant flowing through the second external cooler, and a third temperature sensor configured for measuring a temperature of the coolant in the low temperature cooling circuit downstream of the second external cooler, wherein the third control valve is configured to regulate the coolant flow through the second external cooler based on the temperature measured by the third temperature sensor.

In some aspects, the internal combustion engine may comprise an engine block having a first end side and an opposing second end side, and wherein the first compressor and the pre-compressed intake air high temperature cooler (in some embodiments also the pre-compressed intake air low temperature cooler) are mounted as a first assembly at the first end side of the engine block, and the second compressor and the compressed intake air high temperature cooler (in some embodiments also the compressed intake air low temperature cooler) are mounted as a second assembly at the second end side of the engine block, and the first pump and the second pump are mounted at the first or second end side of the engine block to be driven by the crankshaft.

Herein, the term "internal combustion engine" may refer to internal combustion engines which may be used as main or auxiliary engines of stationary power providing systems such as power plants for production of heat and/or electricity as well as in ships/vessels such as cruiser liners, cargo ships, container ships, and tankers. Fuels for internal combustion engines may include diesel oil, marine diesel oil, heavy fuel oil, alternative fuels or a mixture thereof, and natural gas.

In addition, the term "internal combustion engine" as used herein is not specifically restricted and comprises any engine, in which the combustion of a fuel occurs with an oxidizer to produce high temperature and pressure gases, which are directly applied to a movable component of the engine, such as pistons or turbine blades, and move it over a distance thereby generating mechanical energy. Thus, as used herein, the term "internal combustion engine" comprises piston engines and turbines.

Examples of internal combustion engines for the herein disclosed configurations of a cooling system include medium speed internal combustion diesel engines, like inline and V-type engines of the series M20, M25, M32, M43 manufactured by Caterpillar Motoren GmbH & Co. KG, Kiel, Germany, operated in a range of 500 to 1000 rpm.

Although the preferred embodiments of this invention have been described herein, improvements and modifications may be incorporated without departing from the scope of the following claims.

## Claims

1. A cooling system (500) for a two-stage turbocharged internal combustion engine, comprising:
a high temperature cooling circuit (30) comprising a first pump (32, 332) for pumping a first coolant through the high temperature cooling circuit (30) and a pre-compressed intake air high temperature cooler (34) for cooling pre-compressed intake air with the first coolant, the pre-compressed intake air being generated by a first compressor (12) of a low pressure stage turbocharger of the two-stage turbocharged internal combustion engine; and
a low temperature cooling circuit (50) comprising a second pump (52, 532) for pumping a second coolant through the low temperature cooling circuit (50) and a compressed intake air low temperature cooler (54) for cooling compressed intake air with the second coolant, the compressed intake air being generated by a second compressor (14) of a high pressure stage turbocharger of the two-stage turbocharged internal combustion engine by compressing the pre-compressed intake air,
wherein, for cooling the compressed intake air prior to cooling with the compressed intake air low temperature cooler (54), the high temperature cooling circuit (30) further comprises a compressed intake air high temperature cooler (36) positioned upstream of the compressed intake air low temperature cooler (54).

2. The cooling system (500) according to claim 1, wherein the low temperature cooling circuit (50) comprises a pre-compressed intake air low temperature cooler (56) positioned downstream of the pre-compressed intake air high temperature cooler (34) for further cooling the pre-compressed intake air cooled by the pre-compressed intake air high temperature cooler (34).

3. The cooling system (500) according to claim 1 or 2, wherein at least one of the first pump (32, 332) and the second pump (52, 352) is an electrically driven pump.

4. The cooling system (500) according to any one of the preceding claims, wherein at least one of the first pump (32, 332) and the second pump (52, 352) is a mechanically driven pump, e.g. driven by a crankshaft (370) of the internal combustion engine.

5. The cooling system (500) according to any one of the preceding claims, wherein at least one of the high temperature cooling circuit (30) and the low temperature cooling circuit (50) comprises a control valve (40) and a by-pass line (39) for regulating a coolant flow through at least one of the pre-compressed intake air high temperature cooler (34), the pre-compressed intake air low temperature cooler (56), the compressed intake air high temperature cooler (36), and the compressed intake air low temperature cooler (54).

6. The cooling system (500) according to any one of the preceding claims, wherein the high temperature cooling circuit (30) and the low temperature cooling circuit (50) are fluidly interconnected such that the low temperature cooling circuit (50) provides at least partly for the cooling of the coolant of the high temperature circuit (30) via coolant exchange.

7. The cooling system (500) according to any one of the preceding claims, further comprising a control unit (16) configured to control the cooling power of at least one of the pre-compressed intake air high temperature cooler (34), the pre-compressed intake air low temperature cooler (56), the compressed intake air high temperature cooler (36), and the compressed intake air low temperature cooler (54).

8. The cooling system (500) according any one of the preceding claims, wherein at least one of the high temperature cooling circuit (30) and the low temperature cooling circuit (50) comprises an external cooler (38, 58) configured for cooling the coolant flowing in the respective cooling circuit or both cooling circuits.

9. A cooled intake air system for a two-stage turbocharged internal combustion engine, comprising:
a low pressure stage turbocharger comprising a first compressor (12) to provide pre-compressed intake air;
a high pressure stage turbocharger comprising a second compressor (14) for compressing the pre-compressed intake air to provide compressed intake air; and
a cooling system (500) according to any one of claims 1 to 8.

10. An internal combustion engine, comprising:
a crankshaft (370); and
a cooling system (500) according to any one of claims 1 to 8,
wherein the first pump (332) and the second pump (532) of the cooling system (500) are driven by the crankshaft (370), e.g. via a reduction gear.

11. The internal combustion engine of claim 10, further comprising an exhaust gas recirculation system (400), wherein at least one of the high temperature cooling circuit (530) and the low temperature cooling circuit (550) comprise an exhaust gas recirculation cooler (470, 480; 570, 580) of the exhaust gas recirculation system (400).

12. The internal combustion engine of claim 11, wherein the exhaust gas recirculation system (400) further comprises
an exhaust gas recirculation line (440, 475, 490) configured to recirculate a first partial exhaust gas flow from an exhaust gas manifold (424) of the internal combustion engine to an intake air manifold inlet (422) of the internal combustion engine;
an exhaust gas discharge line (430) fluidly connected to the exhaust gas recirculation line (440, 475, 490) and configured to discharge at least a second partial exhaust gas flow;
an exhaust gas turbine (455) configured to be driven by the second partial exhaust gas flow; and
an exhaust gas compressor (460) configured to be driven by the exhaust gas turbine (455) and to compress the exhaust gas of the first partial exhaust gas flow,
wherein the high temperature cooling circuit (530) comprises a first exhaust gas recirculation cooler (470, 570) arranged upstream of the exhaust gas compressor (460) and configured to cool the compressed exhaust gas of the first partial exhaust gas flow and
the low temperature cooling circuit (330) comprises a second exhaust gas recirculation cooler (480, 580) arranged downstream of the exhaust gas compressor (460) and configured to cool the exhaust gas of the first partial exhaust gas flow.

13. A method for cooling intake air of a two-stage turbocharged internal combustion engine, comprising:
cooling pre-compressed intake air with a high temperature cooling circuit (30), the pre-compressed intake air being generated by a low pressure stage turbocharger of the two-stage turbocharged internal combustion engine;
cooling compressed intake air with a low temperature cooling circuit (50), the compressed intake air being generated by a high pressure stage turbocharger of the two-stage turbocharged internal combustion engine by compressing the pre-compressed intake air; and
cooling the compressed intake air with the high temperature cooling circuit (30) prior to cooling with the low temperature cooling circuit (50).

14. The method of claim 13, further comprising cooling exhaust gas with at least one of the high temperature cooling circuit (30) and the low temperature cooling circuit (50).

15. The method of claim 13 or 14, further comprising mechanically driving at least one pump of the high temperature cooling circuit (30) and the low temperature cooling circuit (50) via a crankshaft (370) of the two-stage turbocharged internal combustion engine.
